(19) Europäisches Patentamt
European Patent Office
Office européen des brevets

(11) Publication number: 0 187 341
A1

(12) # EUROPEAN PATENT APPLICATION

(21) Application number: 85116285.9

(22) Date of filing: 19.12.85

(51) Int. Cl.⁴: A 01 N 25/24
A 01 C 1/06

(30) Priority: 24.12.84 US 685288
10.12.85 US 805204

(43) Date of publication of application:
16.07.86 Bulletin 86/29

(84) Designated Contracting States:
AT BE CH DE FR GB IT LI LU NL SE

(71) Applicant: The B.F. GOODRICH Company
Dept. 0015 WHB-6 500 South Main Street
Akron, Ohio 44318(US)

(72) Inventor: Yang, Henry Wu-Hsiang
4818 River Hill Drive
Kingwood Texas 77345(US)

(72) Inventor: Smith, David John
879 Howell Drive
Sheffield Lake Ohio 44012(US)

(74) Representative: von Kreisler, Alek, Dipl.-Chem. et al,
Deichmannhaus am Hauptbahnhof
D-5000 Köln 1(DE)

(54) **Coated seed and method of coating seeds.**

(57) A seed coating is provided which consists essentially of (a) one or more additives bound to the seed by (b) a polymer composition consisting essentially of a salt of poly[acrylic acid], or poly[methacrylic acid], and, a salt of a copolymer of acrylic acid, and/or methacrylic acid, and, an alkyl ester of acrylic acid or methacrylic acid. Seeds treated with such a combination of additives and the polymer composition in neutral or alkaline aqueous solution, when dried, are provided with a coating from about 0.025 mm to about 2 mm thick which (i) has water and oxygen permeability so that the germination rate of the seed will not be adversely affected, (ii) has excellent binding ability to provide a tough non-friable film so as to minimize the problem of dusting or flaking off, (iii) has superior film-forming characteristics so as to be effective when the polymer composition is present in an amount less than 20% by wt, based on the total weight of dry coating on the seed, and (iv) provides adequate hydrophobicity so as to maintain a non-tacky surface which allows the trouble-free planting of seed with mechanical equipment ("plantability"). The polymer composition, without additives, has the unique property, in addition to the foregoing, of critical solubility in water.

EP 0 187 341 A1

0187341

# COATED SEED AND METHOD OF COATING SEEDS

## BACKGROUND OF THE INVENTION

Commercial farming depends upon the use of seeds which have excellent germination and high resistance to soil borne and seed borne diseases. To supply such seeds is the business of the seed industry which supplies treated seeds protected with one or more layers of a seed coating. Since the many varieties of seeds to be coated range widely among the angiospermous and gymnospermous plant seeds, and particularly the leguminous seeds, each of which varieties is to be planted under changing soil conditions and exposed to a wide range of conditions potentially deleterious to seed germination and growth, it will be appreciated why the seed industry strives constantly to improve the coatings on the seeds it furnishes. Most favored among the coatings are those in which the binder is a natural or synthetic polymer having such excellent binding characteristics that it may be used in a minor amount by weight relative to one or more additives which include an adjuvant and/or excipient with which the seed is coated.

By "adjuvant" we refer to a substance which serves to aid or contribute to the germination of the seed and growth of its radical, especially a substance which enhances the effectiveness of the protective coating. Typical adjuvants include fungicides, nematocides, rodenticides, bird repellants, herbicides, miticides, insecticides, growth regulators, plant nutrients and the like. Particular active ingredients commonly used include Captan$^R$, Apron$^R$, Warfarin$^R$, Vitavax$^R$, a carboxin, Magnum$^R$, methoxychlor, TBZ, malathion, mesurol, ammonium nitrate, tetramethylthiuram disulfide, and plant hormones. The amount of active ingredient included in the seed coating depends upon the desired effect and potency of each ingredient and may range from about 0.01 percent by weight (% by wt) to about 10% by wt, based on the total weight of coating. It will be appreciated that the adjuvants referred to by trademarks are well known and that the manufacturers generally provide directions to assist the grower use the adjuvants most effectively.

By "excipient" we refer to an essentially inert substance deemed conducive to germinate the seed, which substance provides bulk as a vehicle for the adjuvant, or which may simply be a coloring agent such as a dye, pigment or lake commonly used for identification purposes, or to camouflage

the seed when it is planted. Typical excipients include finely divided mineral substances such as pumice, attapulgite, bentonite, kaolin zeolite, diatomite, and other clays, modified diatomaceous adsorbents such as Microcel E, charcoal, vermiculite, finely divided organic substances such as peat moss, wood powder, and the like.

Numerous synthetic resinous materials are currently used as binders for the adjuvant and excipient. We list the requirements we deem desirable in an effective all-purpose polymer for use as a binder in a seed coating. The polymer (a) provides a smooth and uniform seed coating; (b) resists hydration at high humidity; (c) results in a hard enough coating which will not be friable during bagging and planting of the seeds; (d) does not allow the generation of dust during processing of the seeds; (e) is non-flammable; (f) has some degree of methanol or ethylene glycol solubility to permit treating seeds at sub-zero temperatures; (g) has relatively low viscosity; (h) does not generate seed aggregates during the coating process; (i) has low temperature stability at as low as about -20$^{o}$C; (j) allows seed treating throughput of at least 100 bushels/hr; (k) is permeable to both water and oxygen; and, (l) can be easily washed off processing equipment when deposited thereon during treating of the seeds with the seed coating formulation, or when planting the treated seeds.

It is self-evident that a water-impermeable seed coating on a seed will negate germination of the seed; however, water-permeability without good water solubility of the polymeric component of the coating will negate commercial acceptance of the coated seed, irrespective of price. Good water solubility of the dry polymeric component is critical. By critical water solubility we refer to solubility of a 1 mil (0.001 inch) thick film of the polymeric component (free of additives) in mildly agitated water at 20$^{o}$C in less than 10 min. Though such critical water solubility is obtainable in many polymers, both natural and synthetic, such polymers are also easily hydrated in a humid environment resulting in a tacky surface on the coated seeds which are rendered "non-plantable", that is, unusable in a commercial seed-planting machine. Many polymer have other deficiencies such as inadequate binding of additives, dust generating friability, etc. attributable to the polymers. Specifically, water solubility without adequate hydrophobicity sufficient to maintain plantability, is a detriment in a seed coating composition.

Among the many polymers disclosed in the prior art are acrylics, modified polyacrylamide, and vinyl acrylic emulsions in U.S. Patent No. 4,272,417; acrylic resin sold under the designation 2467 in U.S. Patent No. 3,113,399; an aqueous emulsion of 10 to 60 percent by weight (% by wt) of a (i) water soluble neutralized copolymer of acrylic acid ("AA") or methacrylic acid ("MAA") (together referred to herein as "(meth)acrylic" acid) (for brevity, "(M)AA") and a lower acrylate, and (ii) a crosslinked copolymer of vinyl acetate and a lower alkyl acrylate, in U.S. Patent No. 3,598,565; and, a mixture of a carboxylated hydrophilic acrylic copolymer, a crosslinking agent for the carboxy of the copolymer, an ultra-violet light absorber, and an animal or bird repellant, in U.S. Patent No. 4,169,902. None of the foregoing polymers provide the aforementioned requirements to an extent sufficient to impart to it widespread commercial acceptance as a seed coating.

Particular resins include the class commonly referred to as acrylates, polyurethanes modified with natural drying oils, partially hydrolyzed copolymers of vinyl chloride and vinyl acetate, polyvinyl alcohol, polyvinyl pyrrolidone, and the like, many of which form tough films providing good protection, but we do not know of any of the foregoing resins which provides all the generally desired requirements for a binder. The effectiveness of the binder is further jeopardized when major amounts by weight of the additive (adjuvant and/or excipient) are to be included in the seed coating, whether in a single layer, or as multiple coatings. The seed coating tends to be friable and flakes off, sacrificing protection of the seed and generating dust; when non-friable, the coating is generally too slow-drying, tends to build up on equipment and be insoluble in water and impermeable to oxygen. Since many additives tend to be injurious to humans, "dusting" of coated seeds during handling and planting is particularly to be avoided. The problem of dusting particularly related to coating peanut seeds is referred to in U.S. Patent No. 4,372,080.

Judging from the variety of seed coating compositions in commercial use, there are several which meet many of the foregoing listed requirements. Though this might, at first blush, appear surprising, it is not for several reasons, the most significant of which is that the film-forming polymer component of the compositions is used in so small an amount relative to the additive(s) it binds to the seed, that the coated seed is reasonably priced and

has satisfactory water and oxygen permeability, therefore adequate respiration and germination.

What is most surprising is the importance of the last of the listed requirements, namely the ability to clean seed processing equipment and also seed-planting machines by washing with available water. To the relatively large seed processor, namely one who processes at least 1000 bushels/day, the last requirement is critical because cleaning with hydrocarbons, chloro(hydro)-carbons, dilute acids or even alkaline, especially ammonia-water, is disfavored. The handling problems of non-aqueous solvents is exacerbated by the environmental restrictions on where and how they are disposed of, as are the restrictions on disposing of acids and alkaline solutions. Though alcoholic and aqueous alkaline dispersions of acrylic copolymers referred to in U.S. Patent No. 4,169,902 are soluble in alkaline (ammonia) water, the dried polymer film is only slowly soluble in such water, a film 1 mil (0.0254 mm) thick taking more than 10 minutes to dissolve with agitation. These acrylic resins are terpolymers of AA, ethyl acrylate (EA), and methyl methacrylate (MMA), the amount of AA being present in a lesser amount (by weight) than either of the other two comonomers. When cross-linked with a cross-linking agent, as suggested, the copolymer formed has a mol wt in excess of 1,000,000 and is insoluble in water, whether alkaline or not.

Thus, despite the excellent film-forming and binding characteristics of the currently available copolymers, clean-up of seed-coating equipment is an arduous and distasteful task even with ammonia water or aqueous alkali. The problem of cleaning up persists when a farmer uses dried and bagged seeds coated with acrylic resin plus additive(s) because a portion of the polymer is transferred from the seeds and adheres, upon direct contact with the treated seeds, to the surfaces of mechanized seed-planting equipment, such as the planting disc commonly used for mechanically planting the coated seeds. Except that the problem now is not simply cleaning up, but interference with the unrestricted flow of coated seeds to the passages of the disc planter. Since, to whatever extent blockage of the planting equipment occurs, it is not easily discovered during planting, the discovery after germination of the planted seeds that there are gaps in the planting, is an unpleasant and costly surprise. A farmer would like very much to keep his seed-planting equipment clean by periodically washing it out to ensure uniform planting of the seeds in

gap-free rows. Thus, the importance of being able to wash off the equipment with available tap water, or well water (hereafter "plain water") can scarcely be exaggerated.

The composition of our invention provides each of the foregoing requirements for a coated seed, and most significantly, the composition is one which can be washed off equipment contaminated with the composition using plain water in less than 10 minutes.

SUMMARY OF THE INVENTION

It has been discovered that (i) a critical requirement of solubility in plain water but adequate hydrophobicity to ensure plantability of the coated seeds in a highly humid environment, (ii) excellent binding ability to provide a tough non-friable film so as to minimize the problem of dusting, (iii) superior film-forming characteristics so as to be effective when the polymer composition is present in an amount less than 20% by wt, based on the total weight of dry coating on a seed, and, (iv) excellent water and oxygen permeability so that the germination of the coated seeds will not be adversely affected, may all be inculcated in a seed coating composition consisting essentially of (a) one or more additives bound to the seed by (b) a mixture of (i) a salt of poly[(meth)acrylic acid], and, (ii) a salt of a thermoplastic copolymer of (meth)acrylic acid, and a lower alkyl ester of (meth)acrylic acid. It is neither a function nor a purpose of the film to accelerate germination. The film serves to bind the additives deemed desirable for the seed which will germinate normally when the conditions for germination are present, with the additives providing their designated function.

It has further been discovered that it is the presence of (i) a salt of poly(acrylic acid) ("PAA") and/or poly(methacrylic acid) ("PMAA"), together referred to herein as poly[(meth)acrylic acid] ("P(M)AA") for brevity, homopolymer in conjunction with (ii) a salt of a thermoplastic copolymer of (meth)acrylic acid and an alkyl ester of (meth)acrylic acid which provides excellent film-forming and binding properties, and which also imparts the unique property of adequate hydrophobicity sufficient to resist hydration during storage and thus maintain good plantability.

It is therefore a general object of this invention to provide a coated seed, coated with a seed coating composition consisting essentially of a mixture of (a) an additive and (b) a water-permeable and highly water-soluble

neutralized or alkaline solution of (i) from about 15 to about 85% by wt of neutralized poly[(meth)acrylic acid] homopolymer, "P(M)AA", and (ii) from about 85% to about 15% by wt of a copolymer of (meth)acrylic acid "(M)AA" and a lower alkyl ($C_1$-$C_6$) ester of (M)AA (this copolymer is represented for brevity by "P(M)AA/E"), which mixture is then dried.

It has also been discovered that the solubility of the salt of P(M)AA with the salt of copolymer P(M)AA/E to form a composition of polymer salts, represented by P[(M)AA/(M)AA/E], in water may be enhanced by a solubility-enhancing amount of a relatively low molecular weight (mol wt) polyethylene glycol ("PEG") and/or poly(ethylene oxide) ("PEO") which function as solubility enhancers. As such, they have no cross-linking function at all.

It is therefore also a general object of this invention to provide a coated seed, and a seed coating composition consisting essentially of an adjuvant and/or an excipient as additive(s), the combined weight of which additive(s) is at least 5 times, and more preferably at least 50 times greater than the combined weight of a neutral or alkaline film-forming composition of P[(M)AA/(M)AA/E] and a solubility-enhancing amount of PEG or PEO each having a weight average mol wt $\overline{Mw}$ in the range from about 200 to about 5,000.

It is another general object of this invention to provide a coated seed which has little proclivity to dust after the aforementioned coating is dried on the seed, which resists hydration at high humidity, yet has excellent water and oxygen permeability so as to permit speedy germination of the seed after it is planted in moist soil; which seed has a substantially non-friable coating; and, when portions of the seed coating do contaminate processing and seed planting equipment, the coating can be washed off with plain water because the P[(M)AA/(M)AA/E] polymers of the seed coating composition has critical water solubility.

## DETAILED DESCRIPTION OF PREFERRED EMBODIMENTS

The preferred embodiments of this invention are applicable to seeds for the agricultural market as well as those for the horticultural market. The agricultural market includes corn, wheat, rice, cotton, soybeans, sorghum and the like; the horticultural market generally refers to vegetables such as tomatoes, lima beans and other beans, lentils, peas, sunflowers, lettuce, decorative plants and flowers and the like. Irrespective of the particular

market in which the coated seeds are to be sold, the invention is applicable to a wide variety of grain and vegetable, monocotyledonous and dicotyledonous seeds, and particularly to leguminous plant seeds such as alfalfa seeds, and seeds with a thin and sensitive testa such as peanut seeds, all of which seeds are to be protected against damage due to fungi and/or bacteria, among an assortment of other potentially deleterious agents or circumstances. Moreover, the treated seeds having a seed coating containing one or more additives, are generally to be stored under a wide variety of environmental conditions without being adversely affected relative to germination of the seed and growth of the radical after germination.

It will now be evident that, depending upon the particular seed to be coated, the conditions under which it is to be stored, and the soil and weather conditions under which it is expected to germinate and grow, the seed coating composition may include a wide spectrum of one or more additives such as those mentioned hereinabove. The choice of additive is within the skill and experience of the grower, and the dosage amount of additive to be used per seed is generally specified by the manufacturer of the additive for use with each type of seed. It is implicit that the additive to be used be inert relative to the film-forming component in the seed coating composition, and that the preselected dosage amount be bound to the coated seed when it is planted. Typically the only additive(s) is one or more adjuvants, for example, a fungicide and/or an insecticide, and/or a micronutrient, but an excipient such as talc may be used to provide a vehicle or diluent for the adjuvant.

If the additive is normally solid, it is used in particulate finely divided form having a primary particle size much smaller than the seed to be coated, the primary particle size generally being smaller than 200 mesh (U.S. standard), more preferably less than 75 microns. If the additive is normally liquid, a dosage amount per seed is absorbed in or adsorbed on a solid excipient or an another adjuvant each of which is used in the aforesaid finely divided form. After the additive, whether liquid or solid, is directly coated on the seeds, it thereafter may be coated with the film-forming polymer composition of this invention. It will be recognized that the terms adjuvant and excipient are used herein in their usual connotation, knowing that depending upon the particular seed to be planted and the conditions under which it is to be germinated and grown, a material generally regarded as an

excipient may function as an adjuvant. and vice versa.

Another option for incorporating an additive into the seed coating is to dissolve or disperse it in the P[(M)AA/(M)AA/E] film-forming component of the coating, or in the liquid in which the P[(M)AA/(M)AA/E] is suspended or dissolved. It is essential that the P[(M)AA/(M)AA/E] be quickly soluble in plain water. To achieve such water solubility, the salts of P(M)AA homopolymer and of the P(M)AA/E copolymer should be used. Such salts are the alkali metal salts and ammonium salts, the latter and potassium salts being most preferred, and, all references to the homopolymer and copolymer as used in the claimed composition refer to the salts of the polymers. Aqueous solutions of the P(M)AA or P(M)AA/E are alkaline being in the range from pH 7 to about pH 12, more preferably pH 8 to 10.

This critical water solubility is determined by coating a stainless steel plate with a 1 mil thick film and suspending the plate vertically in a beaker of plain (distilled) water at 20$^{o}$C which is agitated with a magnetic stirrer. The film dissolves in less than 10 min. Preferred (M)AA/(M)AAE polymers, optionally with PEG or PEO, form clear solutions in neutral or alkaline water, and milky dispersions in acidic water. These polymers also form clear solutions in lower alkanols having from 1 to about 4 carbon atoms, specifically methanol and ethanol, which may be added to an aqueous solution of the P[(M)AA/(M)AA/E] in an amount up to 30% by wt to transport or store the solutions in the deepest cold of Northern Winter. Though the aqueous solution is also soluble in alkylene glycols having a mol wt less than 200 such glycols, for example diethylene glycol and esters thereof, do not dry satisfactorily and are therefore undesirable. Aqueous alkaline solutions containing enough alcohol to modify either the viscosity or the freezing point of the composition substantially, are referred to herein as alcoholic solutions. Such solutions typically contain from 1 to about 40% by wt of methanol or ethylene glycol.

A solution of the P[(M)AA/(M)AA/E] polymers is used as the essential ingredient of the seed coating in one of several ways:

(1) The P[(M)AA/(M)AA/E] polymers in aqueous or alcoholic solution is directly coated on the seeds.

(2) A mixture of one or more additives is coated on the seed, either as a dry powder or as a thin liquid coating which is dried on the seed. The additive-coated seed is then coated with an aqueous or alcoholic solution of

the P[(M)AA/(M)AA/E] polymers.

(3) A mixture of one or more additives with the P[(M)AA/(M)AA/E] polymers is coated on the seeds.

The foregoing embodiments (1 - 3) are referred to as "single layer coatings".

(4) A coated seed, coated as in one of the foregoing embodiments (1 -3) is again coated with another additive, either as a dry powder or as a thin liquid coating which is dried on the seed, and the additive coated seed is then coated with additional solution of the same or analogous P[(M)AA/(M)AA/E] polymers, in a step similar to that described in (1). Similarly, seeds coated as in the foregoing embodiments (2 - 3) may be coated with repetitive coatings. Seeds so coated with plural layers of polymer and/or additive are referred to as "multilayer coated" seeds in which each layer of polymer acts as a binder for the additives and as a barrier between insecticides (say) in one layer and fungicides (say) in another.

Multilayer coatings may also be formed, for example, when a seed is coated with a first layer of one or more insecticides followed by a coating of one or more fungicides in a second layer, the relative order being interchangeable or reversible. The two layers are then coated with a layer of polymer solution which when dried binds the layers of insecticides and fungicides to the seed. Thus the coated seed may have another coating having a chemically (i) equivalent coating, or (ii) a non-equivalent coating as that in the coating first coated on the seed.

When multilayer coatings are desired, one or more of the coatings may include a natural or synthetic polymer or film-forming material which is chemically non-analogous to the P[(M)AA/(M)AA/E] of our invention. For example, the coated seed of our invention may be provided with a final coating of starch in which a symbiotic bacteria is incorporated. In another embodiment, a first coating may include a mixture of a first additive, and 70% by wt PAA and 30% by wt copolymer of AA and ethyl acrylate (EA) in a weight ratio of 1:3; followed by a second (final) coating including a mixture of a second additive, and 30% by wt of PAA and 70% by wt copolymer of AA, EA and methyl methacrylate (MMA) in a weight ratio of 8:57:35 so as to provide a predetermined first type or level of protection in the final (outer) coating, followed by a different type or level of protection by the inner coating.

Again, whether the coated seed has multiple layers or a single layer, it is not a function of the coating to accelerate germination, but only to make sure that no fewer seeds germinate than otherwise would if they were uncoated.

The coated seed of our invention is coated with a composition comprising,

(a) a polymeric composition soluble in water, and,

(b) an additive, conducive to germinate said seed in the presence of moisture and oxygen,

said polymeric composition consisting essentially of a combination of

(i) a salt of a thermoplastic copolymer present in an amount from about 15 percent by weight (% by wt) to about 85% by wt based on the net weight of dry (meth)acrylic based polymer in said coating, said copolymer before neutralization having the structure

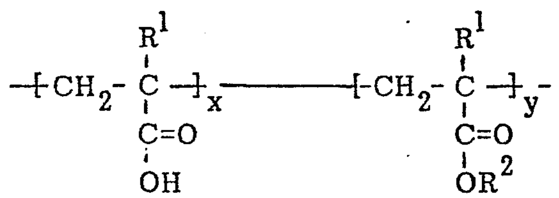

(I)

wherein, $R^1$ is selected from the group consisting of hydrogen and methyl;

$R^2$ represents lower alkyl having from 1 to about 6 carbon atoms;

x is an integer in the range from about 5 but less than 50 representing the % by wt of (meth)acrylic acid present in the copolymer, based on the combined weight of x and y;

y is an integer in the range from about 50 to about 95 representing the % by wt of an alkyl ester of (meth)acrylic acid based on the combined weight of x and y;

the sum of x+y is always 100, and the groups x and y are present in relative heterogeneous order in said copolymer having a weight average molecular weight $\overline{Mw}$ in the range from about 1,000 to about 1,000,000; and,

(ii) a salt of poly[(meth)acrylic acid] homopolymer having a $\overline{Mw}$ in the range from about 1,000 to about 250,000 present in an amount in the range from about 15% to about 85%;

said additive being present in an amount up to about 100 times the weight of said polymer composition.

The copolymer can be made by any convenient method, for example emulsion, suspension or solution polymerization, the most satisfactory way of making the copolymer in the mol wt range desirable for this invention being by solution polymerization. Typically, a lower $C_1$-$C_6$ alkanol is used as a solvent and the polymerization carried out at the reflux temperature of the alkanol, typically isopropanol, which effectively dissipates the heat generated by the exothermic reaction initiated by a suitable free radical catalyst such as a peroxide, for example benzoyl peroxide, or an azo compound such as azodiisobutyronitrile. The catalyst is added in an amount in the range from 0.01 to about 0.1% by wt based on the total weight of monomers. If desired a chain terminator such as dodecanthiol may be included in the reaction mixture to control mol wt.

The viscosity of the solution of seed coating composition used to coat seeds is preferably in the range suitable for use of the solution in spray or mist-coating equipment, but of course the viscosity may be adjusted, for example by controlling total solids, for any other type of batch or continuous seed coating equipment used. Preferred is a solution containing from about 2 to about 50% by wt total P[(M)AA/(M)AA/E] solids (additive-free basis), that is, 2 to 50 parts by wt of dry solids per 100 parts of solution, more preferably from about 5 to about 25% by wt total solids, for use in a continuous seed coating process as practiced in commercially available equipment. The viscosity of the solution is tailored for particular coating equipment to be used, a range of from about 1 cps (Brookfield) to about 1000 cps at 25°C being deemed usable. Most preferred for mist-coating equipment is a viscosity in the range from about 1 to 300 cps. A mist of the aqueous or alcoholic solution of P[(M)AA/(M)AA/E] polymers is produced, in which solution the additives may be homogeneously dispersed, and the seeds are passed through the mist by gravity flow. The mist is deposited substantially uniformly upon the surface of each of the seeds which are immediately dried. The coating process may be repeated if multilayer coatings are desired.

The $\overline{Mw}$ of the (M)AA homopolymer is not narrowly critical since the solubility of the homopolymer is excellent over a wide range, but the solubility is too low at about 300,000 and a range from about 1000 to about 250,000 is preferred, and from about 5,000 to about 100,000 is most preferred. The weight average mol wt is determined by gel permeation chromatography (GPC) using a Styragel column. The polymer is dissolved in tetrahydrofuran

and the measurement is made using polystyrene as the reference, as is routine in the art.

The amount of homopolymer co-soluble in a saturated aqueous or alcoholic solution of the P(M)AA/E copolymer is limited by the fraction of (M)AA monomer in the P(M)AA/E copolymer. Below 5 parts by wt (M)AA per 100 parts of copolymer, not enough P(M)AA homopolymer is co-soluble to give desirable properties. At 50 parts or more of (M)AA per 100 parts of copolymer, the addition of P(M)AA results in an excessively dusty and hygroscopic coating. For any particular copolymer, the resistance to hydration begins to decrease and the coating formed becomes increasingly brittle as the ratio of P(M)AA homopolymer to P(M)AA/E copolymer dissolved in the mixture increases.

When the copolymer is formed essentially from AA, EA and MMA, and the fraction of AA monomer is no more than 10% by wt, the co-solubility of PAA with the copolymer is limited to 15% by wt, the remaining about 85% or more being copolymer. If more homopolymer is added than is co-soluble in the P[(M)AA/(M)AA/E] solution, the copolymer will precipitate from solution. This precipitation may be avoided by adding about 5% by wt (in the dry P[(M)AA/(M)AA/E]) of PEG or PEO as stated hereinabove. When this is done, up to 25% by wt of PAA may be added without causing precipitation.

When the copolymer is formed essentially from about 10 to about 30% by wt of AA, the remaining about 90 to 70% by wt of copolymer being EA, up to 75% by wt of the dry mixture of polymers may be P(M)AA.

Further, as the relative proportion of P(M)AA in the P[(M)AA/-(M)AA/E] solution decreases, or as the relative proportion of (M)AA monomer in the copolymer decreases, the solubility of the dry P[(M)AA/(M)AA/E] film decreases, so that it eventually fails the test of critical water solubility. In a P[(M)AA/(M)AA/E] mixture having below about 5% P(M)AA homopolymer, a wide range of choices of esters and (M)AA in the copolymer fails the test.

The number of (M)AA and ester repeating units in the copolymer are defined by the range of integers represented by x and y respectively, and the relative ratio of repeating units will affect the film-forming and solubility characteristics of the P[(M)AA/(M)AA/E] film formed, as will the particular esters chosen for copolymerization with either acid.

Preferred ester monomers are the lower alkyl acrylates having from 4 to about 6 carbon atoms, for example, methyl acrylate, ethyl acrylate, n-propyl acrylate, i-propyl acrylate, n-butyl acrylate, i-butyl acrylate, sec-butyl acrylate, t-butyl acrylate and the like.

Since it is desirable to obtain maximum water solubility of the dry P[(M)AA/(M)AA/E] polymer film without sacrificing the essential characteristics required of a commercially viable seed coating, the amount of P(M)AA in the polymer mixture is enhanced by adding a solubility-enhancing amount of PEG or PEO in the mol wt ranges specified hereinabove. Specifically with respect to a terpolymer having the structure (III) hereinbelow, desirable solubility enhancement is obtained by the addition of from about 1 to about 20% by wt of PEG and/or PEO, more preferably together present in an amount from about 5 to 10% by wt, based on the dry weight of additive-free film formed. The addition of PEG and/or PEO permits the amount of P(M)AA co-soluble with the P(M)AA/E terpolymer (III) to increase to within the range from about 15 to about 30% by wt based on the net wt of polymer composition. Additional amounts of PEG or PEO provide no additional increase in solubility enhancement and larger amounts than 20% by wt tend to impart the predominant characteristics of the PEG or PEO to the film formed. As will now be self-evident, in the best mode, our invention is used where maximum water solubility of the dried polymer film is desired without deleteriously affecting the properties of the seed coating on the coated seeds.

A preferred polymer composition in which the copolymer is a terpolymer of (M)AA with two alkyl esters of (M)AA, is a terpolymer having the structure

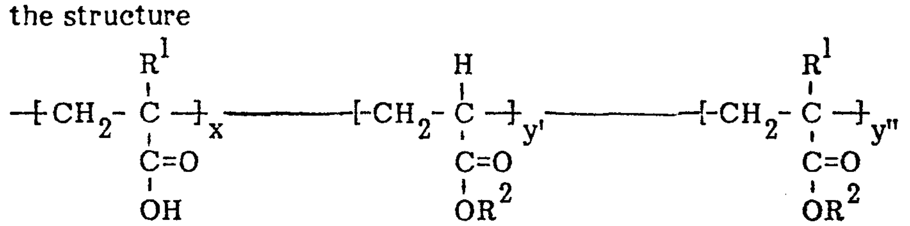

(II)

wherein, $y' + y'' = y$;

x is an integer in the range from about 5 to about 30;

and, said P(M)AA homopolymer is present in an amount in the range from about 50 to about 85% by wt based on the net weight of polymer composition.

Copolymers (II) may be used in which $R^1$ of the (M)AA monomer is H, $R^2$ of each of the ester monomers represents lower alkyl having from 1 to about 6 carbon atoms, preferably methyl, ethyl, or n-butyl, and $R^1$ of one ester is methyl. Most preferred is a polymer composition in which the homopolymer is poly(acrylic acid) and the terpolymer is represented by the

structure

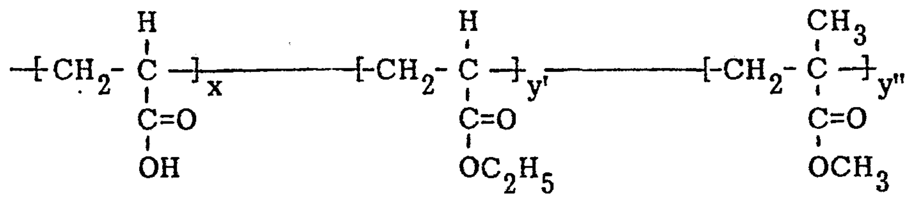

(III)

wherein, x is in the range from about 8 to 20.

When PEG and/or PEO in an amount in the range from about 1 to about 20% by wt of the polymer composition is added, the amount of (M)AA homopolymer co-soluble with the terpolymer (III) is in the range from about 15 to about 25% by wt, the remaining portion of polymer being the terpolymer, based on the net wt of polymer.

Another highly preferred polymer composition is a copolymer having the structure

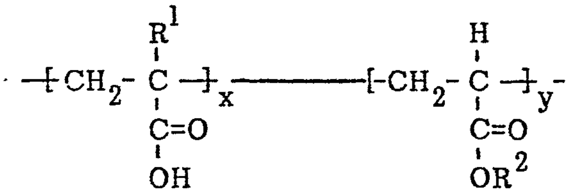

(IV)

wherein, x is an integer in the range from about 10 to about 30;

and, y is an integer in the range from about 70 to about 90;

the sum of x + y is always 100, and the $\overline{Mw}$ of the copolymer is in the range from about 2,000 to about 200,000.

The relatively high solubility of P(M)AA with the copolymer (IV) provides the mixture of polymers in a dry coating with the requisite critical water solubility without the addition of PEO or PEG.

The copolymer (II) or (IV), without being mixed with P(M)AA, fails to meet the requirements of a suitable polymeric coating because it lacks adequate solubility and sufficient permeability to provide normal germination.

It is fortuitous that with the copolymer (IV) a much greater amount of P(M)AA homopolymer is co-soluble than is co-soluble with copolymer (II), and this greater amount does not adversely affect the dusting or hygroscopic characteristics of the seed coating composition. With the addition of P(M)AA in the specified major amount by wt relative to the copolymer, which major amount is most preferred, depending particularly upon the concentration and characteristics of the additive in the composition, it is desirable to add the PEO/PEG solubility enhancer, provided the polyol is relatively low mol wt, in

the range from about 300 to about 5000, such as is commercially available as Carbowax 600.

The coated seeds of our invention may vary widely in size ranging from the very small, for example celery seeds, to the very large, for example peanuts which may be coated with thin single layer coatings from about 0.025 mm to about 0.5 mm thick, to thicker multilayer coatings from about 0.5 mm to about 2 mm thick. The seeds to be coated may range from about 1 mm to about 15 mm in equivalent diameter.

The thickness of the coating is determined by calculating the surface area of a batch of seeds to be coated, and, the net weight of dry polymer which is deposited on the seeds, assuming the coating is substantially uniform. The uniformity of the coating is visually determined by sectioning seeds and examining the cross-sections. This method is particularly applicable to very small seeds about 1 mm in avg diam. Larger seeds are sectioned and the thickness of the coating measured under the microscope.

It is preferred to limit the amount of polymer in the seed coating to about 10% by wt of the dried coating, and generally, the additives will account for at least 20 times and sometimes as much as 50 times the weight of polymer. Of course when a greater amount of polymer is desired in the coating as little as an equal part by weight of additive(s) may be bound, or no additive at all, though there would be little economic incentive for using more polymer than is necessary to accomplish the purpose sought.

It will be evident from the foregoing detailed description that seeds may be coated with alcoholic, glycolic or aqueous alkaline solutions of the polymer composition containing preselected additives. Alcoholic or glycolic solutions may be used in sub-freezing temperatures, and under such conditions, clean-up of the equipment would usually be with alcohol or hot water. Alkaline solutions may be used by a large seed processor especially prepared to do so, but most processors will choose to use plain water solutions, and the following illustrative examples are therefore directed to neutral solutions or alkaline solutions of P(M)AA and a terpolymer (III).

Mixing P(M)AA with P(M)AA/E would appear to be a simple and straightforward task, particularly since the homopolymer and copolymer are each hydrophilic and water-soluble. But it is not. Most mixtures result in phase separation, or precipitation, ascribed to a complex relationship between

stability of the formulation, the acid content of the homopolymer and copolymer, the mol wt of each polymer, and the pH of the solution after mixing. These relationships are illustrated in the following Tables I and II showing phase relationships obtained when a particular copolymer is mixed with P(AA) of different mol wts.

Complicating these relationships further is the morphology, particularly the particle size of the excipient and active ingredients mixed into the solution of polymers. The solubility of the P(M)AA/P(M)AA/E as well as the stability of the solution are greatly influenced by not only the concentration of excipient and active ingredient, but also the physical and chemical characteristics of each. Thus, within the bounds set forth for the claimed seed coating composition, one skilled in the art may tailor the composition for the particular excipient and active ingredients to be bound by the polymer solution.

The following compositions were prepared consisting of a copolymer of AA and EA in a wt ratio of 25:75 mixed with the specified amounts of various PAA having the stated mol wts, both the copolymer and the PAA being neutralized with aqueous KOH to a pH of about 9; in addition, each formulation contained 5 parts by wt of Carbowax 600 per 100 parts of polymer composition (net wt) to enhance the solubility of the PAA in the solution, whether such enhancement was necessary or not. All formulations contained 25% solids. Whether the PAA dissolved in the AA/EA copolymer or not is evidenced by whether there was phase separation. If there was phase separation, the notation in the following Table I states "2-phase".

In the Table I, PAA having different mol wts are listed vertically downwards by "K" code numbers, and horizontally, %PAA refers to the % by wt of the PAAs in the vertical column; the AA/EA copolymer is designated XL-143 and the % by wt XL-143 is listed for each formulation; the designation for Carbowax 600 is C-600.

TABLE I - Phase Behavior of Alkaline Mixtures of Poly(acrylic acid)s and Acrylic acid/Ethyl acrylate Copolymer

| Poly(acrylic acid) "PAA" | 70% PAA 25% XL-143 5% C-600 | 50% PAA 45% XL-143 5% C-600 | 25% PAA 70% XL-143 5% C-600 | 5% PAA 90% XL-143 5% C-600 |
|---|---|---|---|---|
| K-752 Mw 2,100 | 1-phase | 1-phase | 1-phase | 1-phase |
| K-732 Mw 5,100 | 1-phase | 1-phase | 1-phase | 1-phase |
| K-722 Mw 100,000 | 1-phase | 2-phase | 2-phase | 2-phase |
| K-702 Mw 240,000 | 2-phase | 2-phase | 2-phase | 2-phase |

From the foregoing it is evident that mixtures of the AA/EA copolymer with PAA having a mol wt above about 100,000 are not single phase mixtures. By substituting methyl acrylate ("MA") for all or part of the EA in the copolymer, and increasing the amount of PEO/PEG Carbowax in the mixture, a single phase is obtained with K-702. Clearly though, there is found to be a well-defined upper limit of about 250,000 for the mol wt of PAA, above which it will form a two-phase mixture.

In a manner analogous to that described for preparation of the formulations in Table I, compositions were prepared consisting of a copolymer (designated 514H) of AA, EA and MMA, in a wt ratio of 8:57:35, mixed with the specified amounts of various PAAs having the stated mol wts. Both the copolymer and the PAA were neutralized with aqueous KOH to a pH of about 9; in addition, each formulation contained 5 parts by wt of Carbowax 600 per 100 parts of polymer composition to enhance the solubility of the PAA in the solution, whether such enhancement was necessary or not. All formulations contained 20% solids. Whether the PAA dissolved in the AA/EA/MMA copolymer is evidenced by whether there was phase separation. If there was phase separation, the notation in the following Table II states "2-phase".

In the following Table II, PAAs having different mol wts are listed vertically downwards by "K" code numbers, and horizontally, %PAA refers to the % by wt of the PAAs in the vertical column; the AA/EA/MMA copolymer is designated 514H and the % by wt 514H is listed for each formulation; the

designation for Carbowax 600 is C-600. Formulations containing a major amount of any of the PAAs (more than 50% by wt) and 5% Carbowax, the remaining minor amount being 514H, all resulted in two phases, and precipitated.

TABLE II - Phase Behavior of Alkaline Mixtures of Poly(acrylic acid)s and Acrylic acid/Ethyl acrylate/Methyl methacrylate Copolymer

| Poly(Acrylic acid) "PAA" | 5% PAA 90% 514H 5% C-600 | 10% PAA 85% 514H 5% C-600 | 15% PAA 80% 514H 5% C-600 | 25% PAA 70% 514H 5% C-600 |
|---|---|---|---|---|
| K752 Mw 2,100 | 1-phase | 1-phase | 1-phase | 1-phase |
| K-732 Mw 5,100 | 1-phase | 1-phase | 1-phase | 1-phase |
| K-722 Mw 100,000 | 1-phase | 2-phase | 2-phase | 2-phase |
| K-702 Mw 240,000 | 1-phase | 2-phase | 2-phase | 2-phase |

From the foregoing it is evident that mixtures of the AA/EA/MMA copolymer with PAA having a mol wt of 240,000 produces a single phase with a small amount (5% by wt) of K-702, but the mixture gets cloudy indicating the presence of a second phase when the amount of K-702 reaches 10% and the amount of 514H progressively decreases. The mixture becomes decidedly 2-phase above 10%. As with the AA/EA copolymer, substitution of MA for all of the EA, and increasing the amount of Carbowax (PEO) improves the solubility of the PAA in the 514H copolymer solution. The mol wt of the copolymer in our composition is not as narrowly critical as that of the PAA and a preferred range is from about 5,000 to about 50,000.

In addition to the foregoing requirements, a desirable seed coating composition has sufficient slurry stability so that when the slurry (or concentrate) is stored for a reasonable period of time prior to use, the additives do not settle out. Such a slurry (typically 35% by wt pesticides) containing 25% polymer solids, is usually pre-formulated by a seed processor well before coating the seeds, particularly if a batch-coating process is used. He does this to ensure uniformity of coating from one batch to another.

Typically, the processor will fill a concentrate tank with enough slurry to treat seeds over a period of several days or sometimes, weeks. Though such concentrate tanks are usually provided with a stirrer, substantial settling of the additive is not generally easily redispersed as a homogeneous slurry, significantly affecting the uniformity of the seed coating.

In the following Table III is set forth data on slurry stability in which a 35% by wt concentrate of a particulate insecticide, namely dimethyl-N,N'-thiobis(methylimino)carbonyloxy-bis-ethanamidothioate, commonly referred to as "thiodicarb" and commercially available under the Larvin brand, is dispersed and stored in various PAA, copolymer and mixed PAA/copolymer compositions containing 25% polymer solids. The condition of the slurry after 13 days of storage without agitation is recorded, as is the solubility of a dried film 1 mil thick, and the level of dust generation of the dried coated seeds.

TABLE III - Slurry Stability, Solubility and Dust Generation

| Composition 25% tot solid | Slurry Stabil. after 13 days* | Solubility 1 mil film | Dust Generation, after 10 min | 25 min |
|---|---|---|---|---|
| A. K-732 PAA | stiff paste | <10 min | nil | nil |
| B. copolymer XL-143 neat | no settling | >10 min | nil | nil |
| C. Combine 70% by wt A and 30% by wt B | no settling | <10 min | nil | nil |
| D. Combine 45% by wt A and 55% by wt B | no settling | <10 min | nil | nil |
| E. Combine 25% by wt A and 75% by wt B | no settling | <10 min | nil | nil |
| Blank** | stiff paste | <10 min | 7.8 mg | 10.9 mg |

*essentially no settling after 13 days provides acceptable stability

**contains 25% total solids (no polymer solids) of insoluble thiodicarb powder (less than 44 microns in avg particle diam., which powder is immediately washed off.

From the foregoing Table III it is evident that a mixture of thiodicarb powder present in an amount 35% by wt of a neat solution of K-732 PAA containing 25 parts PAA by wt per 100 parts of PAA solution, gives a highly soluble but stiff paste (solution A).

The solution B containing 35% by wt of thiodicarb in a neat alkaline solution of a copolymer of K-732 PAA and EA containing 25 parts copolymer solids per 100 parts solution, is a smooth non-settling slurry, but the film formed on the coated seed does not satisfy the solubility criterion, being essentially insoluble in plain water.

Combining the PAA (solution A) with the alkaline solution (B) of copolymer yields a non-settling slurry and results in the formation of a critically soluble film of polymer. The same is true for a wide range of ratios of PAA to copolymer, provided the ratio remains in the specified range.

The slurry of the insecticide/pesticide in water (35% by wt powder) is a thick paste and cannot contribute to alleviating the settling problem.

The dust generation recorded shows that the level is acceptable with each of the combinations of PAA and copolymer tested.

Dust generation is measured in a test chamber provided by a 500 ml globe-shaped separatory funnel having a through-passage formed by diametrically opposite 0.5" diam glass tubes. The globe is held in spaced apart (by long bolts) cork rings snugly encircling the globe, so that it is adapted to be rolled about its longitudinal axis on a Norton laboratory ball mill roller. Air at very slight pressure (about 2 psig) is blown through the globe into which a test batch (50 g) of seeds is weighed, while the globe is rotating so that dust generated within the globe is blown out of it. The dust leaving the globe is collected in a fritted glass filter which is weighed after the test period, usually 10 min, then 20 min.

For planting seeds mechanically, it is essential that they do not agglomerate. Seeds having a coating of polymer which coating is hygroscopic, that is having inadequate hydrophobicity, will stick together, particularly when exposed to warm, humid air such as is encountered in Summer in a storage barn in the heart of the Midwest. If a polymeric seed coating contains no PAA, but only the copolymer, it is not hygroscopic, but neither will it dissolve in water. When the seed coating contains only PAA (no

copolymer) it dissolves easily but is too hygroscopic.

Accelerated testing to determine whether a polymer seed coating composition is sufficiently non-hygroscopic is done by coating soybean seeds with a mixture of 20% by wt talc and polymer, and storing a pile in a humidity chamber maintained at 100% relative humidity and 42°C. If sticky at the end of 16 hr, the polymer is deemed unsatisfactory.

TABLE IV- Accelerated High Humidity Testing for Stickiness

| Polymer in dried coating on seeds | $T_g$ of polymer (°C) | Condition of seed surface |
|---|---|---|
| K-732 PAA | 120 | sticky - seeds agglomerate |
| XL-143 copol. AA/EA | 11 | sticky-seeds agglomerate |
| Combined K-732 + XL-143 | 80 | not sticky - discrete seeds |
| AA/EA/MMA 514H copol. | 30 | not sticky |
| Combined K-732 + 514H | 85 | not sticky |

From the foregoing data it will now be evident that a large selection of polymer coatings based on esters of (meth)acrylic acid may be used for coating seeds but none of the prior art "acrylics" meet the requirements of a practical, commercially acceptable material for a solid adjuvant which tends to settle out. The difficulty of formulating a satisfactory material extends to various other classes of polymers which appear to provide usable seed coatings.

In the following Table V is summarized the ratings of a wide selection of prior art coatings including acrylics, which ratings were arrived at by selecting representative polymers in each class. Among the "acrylics" tested were (i) latexes of polyacrylates including those available under the Hycar[R] trademark, specifically, 2679X6 and 26120; (ii) and latexes of copolymers of an acrylate with a non-acrylate vinyl monomer, specifically Hycar 2600X315 and 2600X288; (iii) salts of water-soluble copolymers of AA with one or more alkyl esters of AA (designated "copolymers" in the Table V), particularly AA/EA and AA/EA/MMA copolymers; (iv) salts of poly(acrylic

acid), designated PAA, particularly the K-702, 722, 732 and 752 polymers; (v) poly(vinyl alcohol), designated PVOH, particularly vinyl 540 and Alcotec 72.5 available from Harlow Chemical Co.; (vi) cellulose derivatives, particularly carboxymethylcellulose and hydroxyethylcellulose available from Union Carbide; (vii) poly(vinyl pyrrolidone) designated PVP, particularly K-30 and K-60 obtained from GAF; and (viii) some natural vegetable oils such as linseed oil and tung oil, and some mineral oils, collectively designated "oils".

A rating of "good" indicates sufficiently good performance to merit further consideration; "fair" indicates a likelihood that the polymer will not merit further consideration; and "poor" indicates the polymer is unsatisfactory. The rating listed for each class of polymers is the average for the polymers tested, if more than one was tested.

TABLE V - Classes of Polymers Screened

| Criteria for Coating | Latexes | Water-sol. copolymers | PAA | PVOH | PEO/ PEG | PVP | Cell-ulose | Oils |
|---|---|---|---|---|---|---|---|---|
| Germination | Good | Good | Good | Good | Good | Good | Good | Variable |
| Flamm. of coating soln. | Not | Not | Not | Not | Not | Not | Not | Not |
| Viscosity of 25% solids* | Good | Good | Good | Poor | Fair | Fair | Poor | Good |
| Slurry stability | Good | Good | Good | Fair | Fair | Fair | Fair | Fair |
| Processabil- of seeds | Good | Good | Good | Poor | Good | Good | Fair | Good |
| Resistance to Humidity | Good | Good | Fair | Poor | Poor | Poor | Fair | Variable |
| Lack of dusting | Good | Good | Fair | Fair | Poor | Fair | Poor | Poor |
| Solubility in water | Poor | Fair | Good | Poor | Good | Good | Poor | Fair |

*a solution with viscosity less than 500 cps is good, more than 1000 cps, poor.

The following laboratory procedure demonstrates the use of the coating composition of our invention for coating sorghum seeds. The procedure results in coated seeds with a smooth and substantially uniform coating comparable to that obtained with Gustafson seed processing equipment.

1. Clean and dry a 2 liter glass jar.
2. Weigh one pound of sorghum seeds into the jar.
3. Dust in 1.7 gm of talc, or the desired fungicides such as Captan[R] powder, or insecticides, etc. and shake vigorously for 5 min to ensure good mixing.
4. Add 1.7 gm of polymer solution (which is equivalent to 6 fluid oz per 100 pounds) and shake vigorously for another 5 min.
5. When more than one type of active ingredient is needed, steps 3 and 4 are preferably repeated for each ingredient. The polymer solution is generally the last component added.
6. Empty the coated seeds into an aluminum pan and dry in a 50$^{o}$C oven for 10 min, and then at room temperature for at least 36 hr before proceeding to test the seeds for germination.

Steps 3 and 4 above may be combined. In this case, the talc or the desired fungicides, etc. will be mixed with polymer solution to form a slurry prior to coating. Typically the slurry will contain from 5% to about 30% by wt total solids depending upon the particular physical characteristics of the mixture of adjuvant pesticide and combined polymer solids. The slurry may be sprayed on the seeds falling through a coating chamber, or more simply, a predetermine weight of slurry is poured into a rotating drum containing a known weight of seeds which are tumbled until they are uniformyly coated with the slurry. The coated seeds are then spread on a belt passing through a low temperature convection dryer until the coating is substantially moisture free.

The amount of coating composition used is directly proportional to the total surface area of the seed for any desired thickness of coating. The larger the seed the less coating composition is used per unit weight of seed. For 100 lb of soybean 2 fl oz of Captan powder and 4 fl oz of polymer composition provide adequate coverage and a thickness of coating comparable to that formed on the sorghum seeds coated as illustrated hereinabove.

The following Table VI sets forth the results of a 4-day germination

test at 25°C of the sorgum seeds coated as described hereinabove with a 5% total solids polymer composition comprising a mixture of 20% by wt poly(acrylic acid) and 75% by wt terpolymer (III) and 5% by wt PEG, compared with uncoated seeds (control). The germination test is carried out as described in "Rules for Testing Seeds" Association of Official Seed Analysts, Stone Printing Company, Lansing, MI. Vol 6, No 2, p 30, (1981).

Table VI - 4-DAY GERMINATION RESULTS WITH SORGHUM SEEDS

| | Day 1 | Day 2 | Day 3 | Day 4 |
|---|---|---|---|---|
| <u>% of seeds germinated</u> | | | | |
| Control | 8 | 96 | 96 | 100 |
| Coated | 48 | 96 | 96 | 100 |
| <u>Avg. Radical Length</u>, cm. | | | | |
| Control | 0.1 | 0.6 | 1.9 | 4.8 |
| Coated | 0.1 | 0.9 | 3.1 | 5.9 |

The following Table VII sets forth test data derived from extended germination tests of medium quality sorghum seeds which were observed for % of seeds germinated after the specified number of days at the designated germination temperature. The same number of seeds were used for each test batch at each temperature. The seeds for the 4-day test were preconditioned by planting in cold soil at 10°C for 7 days before being transferred to a germination bed which was held at 25°C for 4 days, after which the observations as to germination and the calculations for % of seeds germinated were made. The experimental error is about ±5%. The polymer solutions in all batches contained 5% total solids. It will be noted that the highest percentage of seeds is germinated when they are coated only with talc. This is because the talc absorbs moisture and holds it next to the seed thus improving itw chances for germination. The addition of the mixture of PAA and copolymer provides sufficient hydrophobicity to lower the percentage of seeds germinated.

Table VII - EXTENDED PERIOD GERMINATION DATA

| | 3-day (25°C) | 4-day (25°C) | 5-day (18°C) | 7-day (25°C) |
|---|---|---|---|---|
| Control (untreated) | 68 | - | 71 | 69 |
| Treated with talc only | 76 | 73 | 73 | 78 |
| Commercial composition* | 65 | 76 | 64 | 70 |
| Coating composition[a] | 76 | 63 | 73 | 79 |
| Coating composition[b] | 70 | 68 | 67 | 73 |
| Coating composition[c] | 61 | 69 | 67 | 73 |
| Coating composition[d] | 63 | 64 | 63 | 72 |

[a]contains 15% PAA, 85% terpolymer (III)[a], talc and Captan.
[b]contains 75% PAA, 25% copolymer (IV), talc and Captan.
[c]contains 25% PAA, 75% terpolymer (III)[b], talc and Captan.
[d]contains 20% PAA, 75% terpolymer (III)[c], 5% PEG-600, talc and Captan.
*Gustafson tank mix - water solution of Captan & Apron FL with surfactants
(III)[a] contains 8% AA, 38% ethyl acrylate, 37% MMA, and 17% NMA
(III)[b] contains 25% AA, 70% ethyl acrylate, 5% MMA
(III)[c] contains 12% AA, 26% ethyl acrylate, and 62% MMA.
(IV) contains 25% AA, and 75% ethyl acrylate.

It will be appreciated from the foregoing data that the germination characteristics of coated seeds will depend upon the type of seeds, the amount of dry coating sufficient to obtain desired protection, the conditions of planting the seeds, and the ambient soil and weather conditions which are responsible for germination, inter alia. The method of applying the coating is not critical provided it results in acceptable uniformity of the coating, and such uniformity is typically obtained with commercially available seed coating equipment. The coating conditions will typically be chosen for the type of seed to be coated and the equipment to be used, the coating temperature being above about -20°C but below that which is deleterious to the germination of the seed. For coating in winter at subfreezing temperatures (below 0°C) it is preferred to use an alcholic or glycolic solution, but in other seasons, at ambient temperatures in the range from about 15°C to about 25°C, aqueous solutions of the polymer composition are most preferred.

As will be evident from the foregoing teaching of the restricted form in which the combination of P(M)AA and copolymer (I) is useful as a seed coating composition, and only when it is used in conjunction with P(M)AA of specified mol wt, a general presentiment that a hydrophilic polymer, which may form either a water-permeable or a water-impermeable film, should make a useful seed coating, does not enable one to make an effective seed coating with "acrylics". A disclosure that any hydrophilic polymer containing both hydroxyl and carboxyl groups, among many others, may advantageously be used, fails to enable one skilled in the art to make a seed coating which will meet the requirements of solubility, hygroscopicity and dust generation.

The following illustrative example describes the formation of a multilayered coating on sorghum seeds (avg diam 5 mm) which are first coated with a slurry of mixed fungicides, then coated with a slurry of thiodicarb.

A first slurry is prepared by mixing 3 fl oz each of Captan liquid fungicide and Apron FL liquid systemic fungicide with a solution of 70% by wt K-732 PAA (mol wt 5,100) and 30% by wt XL-143 (AA/EA=25:75 by wt) until the volume of the mixture is 15 fl oz. This 15 fl oz volume is to be uniformly coated on 100 lb of the sorghum seeds. For laboratory test purposes only 1 lb of seeds is coated, therefore only 0.15 fl oz, or 4.43 ml of the mixed liquids is poured onto the pound of seeds while they are tumbled until uniformly coated, about 10 min. The seeds are then poured onto a tray and dried in a convection oven at 40$^{o}$C.

A second slurry is prepared by weighing out 1 lb of thiodicarb insecticide powder into a beaker then adding a sufficient amount of a solution of 5% PAA, 90% 514H and 5% C-600 Carbowax to bring the volume of the thoroughly mixed ingredients to 15 fl oz., which is the amount to be used for 1 cwt. In a manner analogous to that described for the first slurry, 4.43 ml of the mixture is coated on the seeds on which the first slurry has been dried. The seeds are coated with the second slurry by tumbling, then dried as before.

In the foregoing example the first slurry is a mixture of PAA and a copolymer of AA and a single ester in which a mixture of fungicides is dispersed; the second slurry is a mixture of PAA and a copolymer of AA and two esters, which mixture is chemically equivalent to the first, but has

dispersed in it an insecticide. If desired, additional coatings may be sequentially dried onto the seeds, each coating being of a desired thickness greater than about 0.02 mm, so that the cumulative thickness of multiple coatings does not exceed about 2 mm. In general, a single dried coating will be less than 1 mm thick, and it is not practical to build up multiple layers much thicker than 2 mm because of flaking off.

In the following examples set forth in the Tables herebelow, 1 cwt lots of various types of seeds are coated with different slurry formulations containing one or more active ingredients to be applied at the stated concentrations per cwt, dried and tested for germination. A sample of the coated seeds were germinated at 25°C in accordance with the Rules, supra. A first count for percentage germination is taken at the end of 3 days, and a final count at the end of 7 days. In each of the different seeds coated with the composition of this invention, the dried coating adhered firmly to the surface of the seed. There was no noticeable enlargement of the seed due to swelling caused by absorption of the moisture from the aqueous composition. The mixed PAA and AA/EA solids are referred to as "polymers".

Table VIII - Germination of Sunflower Seeds

| Slurry Composition - Active Ingredient + 70% PAA + 30% AA/EA (1:3), 15% solids | Percentage Germination First count | Final Count |
|---|---|---|
| a. 16 fl oz polymers, NO active ingredient | 83 | 90 |
| b. Captan 400D (3 fl oz) and Apron FL (3 fl oz) | 83 | 89 |
| c. 16 fl oz polymers + (a) | 81 | 88 |
| d. Vitavax 34 (2 fl oz) | 91 | 94 |
| e. 16 fl oz polymers + (c) | 82 | 91 |
| f. Thiodicarb (16 oz) + 16 fl oz polymers | 85 | 90 |
| g. Thiodicarb (16 oz) and Vitavax 34 (2 fl oz) + 16 oz polymers | 86 | 93 |

Table IX - Germination of Field Corn - Variety Pioneer 3541

| Slurry Composition - Active Ingredient + 70% PAA + 30% AA/EA (1:3), 15% solids | Percentage Germination First count | Final Count |
|---|---|---|
| a. 32 fl oz polymers, NO active ingredient | 96 | 97 |
| b. Thiodicarb (16 oz) + (a) | 91 | 95 |
| c. Thiodicarb (32 oz) + (a) | 93 | 98 |

Table X - Germination of Lima Beans - Variety Fordhook 242

| Slurry Composition - Active Ingredient + 70% PAA + 30% AA/EA (1:3), 15% solids | Percentage Germination First count | Final Count |
|---|---|---|
| a. Captan 400D (2 fl oz) | 72 | 96 |
| b. 4 fl oz polymers + (a) | 69 | 91 |
| c. Thiodicarb (2 oz) + (a) | 80 | 96 |
| d. Thiodicarb (4 oz) + (b) | 66 | 89 |
| e. Vitavax 34 (2 fl oz) + (c) | 75 | 94 |
| f. Vitavax 34 (2 fl oz) + (d) | 71 | 93 |
| g. Lorsban 50SL (2 oz) + (a) | 65 | 92 |

Table XI - Germination of Soybeans - Variety Davis

| Slurry Composition - Active Ingredient + 70% PAA + 30% AA/EA (1:3), 15% solids | Percentage Germination First count | Final Count |
|---|---|---|
| a. Vitavax 200 (4 fl oz) | 73 | 86 |
| b. 16 fl oz polymers + Thiodicarb (16 oz) + (a) | 66 | 84 |
| c. 24 fl oz polymers + Thiodicarb (24 oz) + (a) | 56 | 81 |
| d. 32 fl oz polymers + Thiodicarb (32 oz) + (a) | 61 | 83 |
| e. 32 fl oz polymers + NO active ingredient | 58 | 74 |

Table XII - Germination of Cotton Seeds - Variety Stoneville 506

| Slurry Composition - Active Ingredient + 70% PAA + 30% AA/EA (1:3), 15% solids | Percentage Germination First count | Final Count |
|---|---|---|
| a. Captan 30DD(2.3 fl oz) + Vitavax 30C (2 fl oz)) | 94 | 96 |
| b. Thiocarb (8 oz) + 8 fl oz polymers + (a) | 83 | 93 |
| c. Thiocarb (12 oz) + 12 fl oz polymers + (a) | 86 | 92 |
| d. Thiocarb (16 oz) + 16 fl oz polymers + (a) | 86 | 94 |
| e. Thiocarb (32 fl oz) + 32 fl oz polymers + (a) | 90 | 93 |
| f. 32 fl oz polymers + (a) | 88 | 91 |

From the foregoing data it is evident that the mixed polymers, in combination with a dosage amount of an insecticide and/or fungicide provides essentially the same percentage of germination as is obtained without the polymers, indicating the polymers have no detrimental effect on the germination rate. Moreover, as is particularly evident with cotton seeds, a dosage amount of from 8 oz to 32 oz of polymer solution (15% solids) provides essentially the same percentage germination, indicating there is wide latitude of tolerance in the dosage amount applied.

## CLAIMS

1. A coated seed having a dry coating comprising,
(a) a polymer composition soluble in water and consisting essentially of

(i) a salt of a thermoplastic copolymer present in an amount from about 15 percent by weight (% by wt) to about 85% by wt based on the net weight of dry (meth)acrylic acid based polymer in said coating, said copolymer before neutralization having the structure

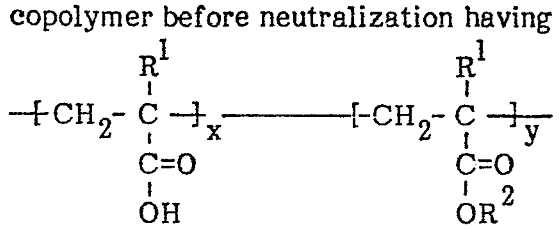

wherein, $R^1$ is selected from the group consisting of hydrogen and methyl;

$R^2$ represents lower alkyl having from 1 to about 6 carbon atoms;

x is an integer in the range from about 5 but less than 50 representing the % by wt of (meth)acrylic acid present in the copolymer, based on the combined weight of x and y;

y is an integer in the range from about 50 to about 95 representing the % by wt of an alkyl ester of (meth)acrylic acid based on the combined weight of x and y;

the sum of x+y is always 100, and the groups x and y are present in said copolymer having a weight average molecular weight $\overline{Mw}$ in the range from about 1,000 to about 1,000,000 in a heterogeneous relative order; and,

(ii) a salt of poly[(meth)acrylic acid] homopolymer having a $\overline{Mw}$ in the range from about 1,000 to about 250,000 present in an amount in the range from about 15% to about 85%; and,

(b) an additive, conducive to germinate said seed in the presence of moisture and oxygen, said additive being present in an amount up to about 100 times the weight of said polymer composition.

2. The coated seed of claim 1 wherein said additive is selected from an adjuvant and an excipient.

3. The coated seed of claim 2 including a solubility-enhancing amount of a solubility enhancer selected from the group consisting of polyethylene glycol and poly(ethylene oxide) each having a $\overline{Mw}$ in the range from 200 to about 5,000, said amount being sufficient to dissolve more of said homopolymer in said copolymer than can be dissolved in the absence of said solubility enhancer.

4. The coated seed of claim 2 wherein said copolymer before neutralization has the structure

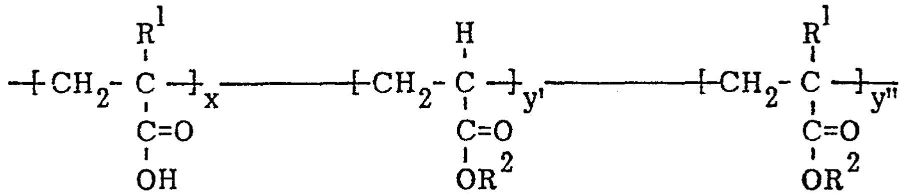

wherein, y' + y" = y;

x is an integer in the range from about 5 to about 30;

and, said homopolymer is present in an amount in the range from about 50 to about 85% by wt based on the net weight of polymer composition.

5. The coated seed of claim 4 wherein said homopolymer is poly[acrylic acid].

6. The coated seed of claim 3 wherein said copolymer has the structure

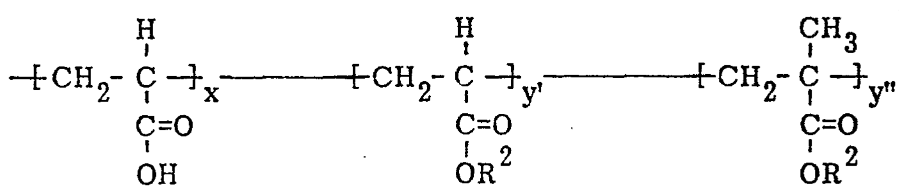

wherein, y' + y" = y; and, x is in the range from about 5 to 30;

said polyethylene glycol and poly(ethylene oxide) are together present in an amount in the range from about 1 to about 20% by wt based on the net weight of polymer composition,

and, said homopolymer is poly[acrylic acid] present in an amount in the range from about 50% to about 85% by weight based on the net weight of polymer composition.

7. The coated seed of claim 2 wherein said adjuvant is selected from the group consisting of fungicides, nematocides, rodenticides, bird repellants, herbicides, miticides, insecticides, growth regulators, and plant nutrients; and, said excipient is selected from the group consisting of a vehicle for said adjuvant, and a coloring agent.

8. The coated seed of claim 7 wherein said dry coating is an essentially uniform and continuous coating having a thickness in the range from about 0.02 mm to about 2 mm thick.

9. The coated seed of claim 8 wherein another coating having a chemically equivalent polymer composition as that on said coated seed, is deposited thereon.

10. The coated seed of claim 8 wherein another coating having a chemically non-equivalent polymer composition as that on said coated seed, is deposited thereon.

11. The coated seed of claim 8 wherein said dry coating is permeable to moisture and oxygen, and said polymer composition, when free of additive and in a thickness of 1 mil (0.0254 mm), is soluble in water in no more than 10 minutes at 20$^{\circ}$C.

0187341

12. A composition for coating seeds comprising,

(a) a polymeric composition soluble in water, and,

(b) an additive, conducive to germinate said seed in the presence of moisture and oxygen,

said polymeric composition consisting essentially of a mixture of

(i) a salt of a thermoplastic copolymer present in an amount from about 15 percent by weight (% by wt) to about 85% by wt based on the net weight of dry (meth)acrylic acid based polymer in said coating, said copolymer before neutralization having the structure

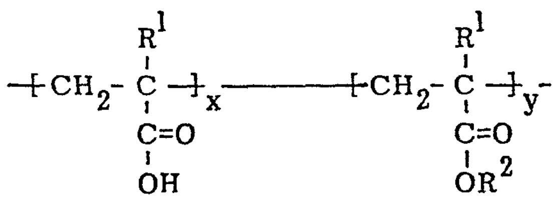

wherein, $R^1$ is selected from the group consisting of hydrogen and methyl;

$R^2$ represents lower alkyl having from 1 to about 6 carbon atoms;

x is an integer in the range from about 5 but less than 50 representing the % by wt of (meth)acrylic acid present in the copolymer, based on the combined weight of x and y;

y is an integer in the range from about 50 to about 95 representing the % by wt of an alkyl ester of (meth)acrylic acid based on the combined weight of x and y;

the sum of x+y is always 100, and the groups x and y are present in said copolymer having a weight average molecular weight $\overline{Mw}$ in the range from about 1,000 to about 1,000,000 in a heterogeneous relative order; and,

(ii) a salt of poly[(meth)acrylic acid] homopolymer having a $\overline{Mw}$ in the range from about 1,000 to about 250,000 present in an amount in the range from about 15% to about 85%; and,

(b) an adjuvant/excipient additive, conducive to germinate said seed in the presence of moisture and oxygen, said additive being present in an amount up to about 100 times the weight of said polymer composition.

13. The seed coating composition of claim 12 including a solubility-enhancing amount of a solubility enhancer selected from the group consisting of polyethylene glycol and poly(ethylene oxide) each having a $\overline{Mw}$ in the range from 200 to about 5000, said amount being sufficient to dissolve more of said homopolymer in said copolymer than can be dissolved in the absence of said solubility enhancer.

14. The seed coating composition of claim 12 wherein said copolymer before neutralization has the structure

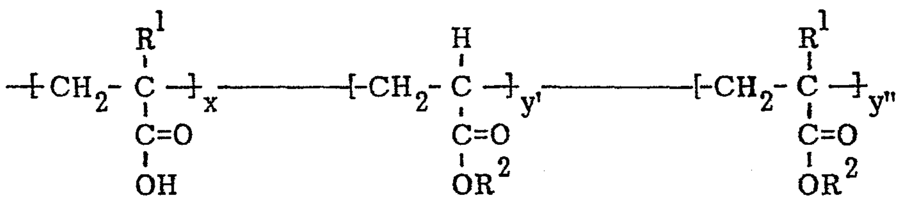

wherein, $y' + y'' = y$;

x is an integer in the range from about 5 to about 30;

and, said homopolymer is present in an amount in the range from about 50 to about 85% by wt based on the net weight of polymer composition.

15. The seed coating composition of claim 14 wherein said homopolymer is poly[acrylic acid].

16. The seed coating composition of claim 13 wherein said copolymer has the structure

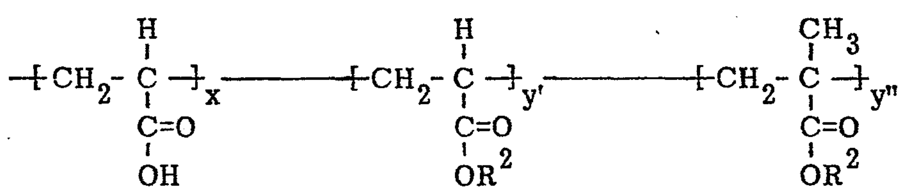

wherein, $y' + y'' = y$; and. x is in the range from about 5 to 30;

said polyethylene glycol and poly(ethylene oxide) are together present in an amount in the range from about 1 to about 20% by wt based on the net weight of polymer composition,

and, said homopolymer is poly[acrylic acid] present in an amount in the range from about 50% to about 85% by weight based on the net weight of polymer composition.

17. The seed coating composition of claim 12 wherein
x is an integer in the range from 10 to 30;
y is an integer in the range from 70 to 90; and
said copolymer has a $\overline{Mw}$ in the range from about 2,000 to about 200,000.

18. The seed coating composition of claim 12 wherein said adjuvant iis selected from the group consisting of fungicides, nematocides, rodenticides, bird repellants, herbicides, miticides, insecticides, growth regulators, and plant nutrients; and, said excipient is selected from the group consisting of a vehicle for said adjuvant, and a coloring agent.

19. The seed coating composition of claim 18 including dimethyl-N,N'-thiobis(methylimino)carbonyloxy-bis-ethanamidothioate in an amount sufficient to provide protection against pests including insects and fungi.

20. The seed coating composition of claim 18 wherein said coating, when dry, is an essentially uniform and continuous coating having a thickness in the range from about 0.02 mm to about 2 mm thick.

21. The seed coating composition of claim 20 wherein another coating having a chemically equivalent polymer composition as that on said coated seed, is deposited thereon.

22. The seed coating composition of claim 20 wherein another coating having a chemically non-equivalent polymer composition as that on said coated seed, is deposited thereon.

23. The seed coating composition of claim 20 wherein said coating when dry, is permeable to moisture and oxygen, and said polymer composition, when free of additive and in a thickness of 1 mil (0.0254 mm), is soluble in water in no more than 10 minutes at 20°C.

24. A method of coating seeds to help protect them against soil borne and seed borne diseases, comprising coating said seeds at a temperature above about -20°C but below that which is deleterious to the germination of the seed, with a solution of a polymer composition which results in a dry coating in an amount sufficient to obtain desired protection, said dry coating comprising,

(a) said polymer composition soluble in water and consisting essentially of

(i) a salt of a thermoplastic copolymer present in an amount from about 15 percent by weight (% by wt) to about 85% by wt based on the net weight of dry (meth)acrylic acid based polymer in said coating, said copolymer before neutralization having the structure

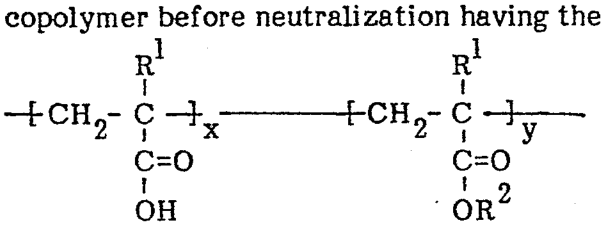

wherein, $R^1$ is selected from the group consisting of hydrogen and methyl;

$R^2$ represents lower alkyl having from 1 to about 6 carbon atoms;

x is an integer in the range from about 5 but less than 50 representing the % by wt of (meth)acrylic acid present in the copolymer, based on the combined weight of x and y;

y is an integer in the range from about 50 to about 95 representing the % by wt of an alkyl ester of (meth)acrylic acid based on the combined weight of x and y;

the sum of x+y is always 100, and the groups x and y are present in said copolymer having a weight average molecular weight $\overline{Mw}$ in the range from about 1,000 to about 1,000,000 in a heterogeneous relative order; and,

(ii) a salt of poly[(meth)acrylic acid] homopolymer having a $\overline{Mw}$ in the range from about 1,000 to about 250,000 present in an amount in the range from about 15% to about 85%; and,

(b) an additive, conducive to germinate said seed in the presence of moisture and oxygen, said additive being present in an amount up to about 100 times the weight of said polymer composition.

European Patent Office

# EUROPEAN SEARCH REPORT

0187341

Application number

EP 85 11 6285

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| D,A | US-A-3 598 565 (T.M. GRAVES)<br><br>* Whole document *<br>--- | 1-3,7,8,12,18,20,24 | A 01 N 25/24<br>A 01 C 1/06 |
| A | GB-A- 734 728 (MONSANTO)<br><br>* Whole document *<br>--- | 1,2,7,12,18,24 | |
| A | US-A-4 123 249 (J.F. VARTIAK)<br>* Whole document *<br>----- | 1,2,7,12,18 | |
| | | | TECHNICAL FIELDS SEARCHED (Int. Cl.4) |
| | | | A 01 N<br>A 01 C |

The present search report has been drawn up for all claims

| Place of search | Date of completion of the search | Examiner |
|---|---|---|
| THE HAGUE | 15-04-1986 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document